Europäisches Patentamt

European Patent Office

Office européen des brevets

(11) Publication number: **0 143 789**
**B1**

# EUROPEAN PATENT SPECIFICATION

(45) Date of publication of patent specification: **20.04.88**

(21) Application number: **84900675.4**

(22) Date of filing: **12.01.84**

(86) International application number:
**PCT/US84/00031**

(87) International publication number:
**WO 84/02776 19.07.84 Gazette 84/17**

(51) Int. Cl.⁴: **G 01 N 33/68**

(54) AN IMPROVED APPARATUS FOR SEQUENCING PEPTIDES AND PROTEINS.

(30) Priority: **14.01.83 US 458226**

(43) Date of publication of application:
**12.06.85 Bulletin 85/24**

(45) Publication of the grant of the patent:
**20.04.88 Bulletin 88/16**

(84) Designated Contracting States:
**AT BE CH DE FR GB LI LU NL SE**

(56) References cited:
**US-A-3 725 010**
**US-A-3 892 531**
**US-A-4 065 412**

(73) Proprietor: **BECKMAN INSTRUMENTS, INC.**
**Executive Office 2500 Harbor Boulevard Box 3100**
**Fullerton California 92634 (US)**

(72) Inventor: **OHMS, Jack, I.**
**877 Aspen Way**
**Palo Alto, CA 94303 (US)**
Inventor: **PENHASI, Harry, A.**
**11064 La Paloma Drive**
**Cupertino, CA 95014 (US)**
Inventor: **QADEER, Majid**
**4298 Wilkie Way Apt. H**
**Palo Alto, CA 94306 (US)**

(74) Representative: **Wotherspoon, Graham et al**
**FITZPATRICKS 4 West Regent Street**
**Glasgow G2 1RS Scotland (GB)**

Courier Press, Leamington Spa, England.

## Description

Background of the Invention

This invention relates to an improved method for performing the sequential degradation of peptide chains for purposes of analyzing the constituents of the chain.

It is important to analyze the amino acid sequence of proteins and peptides in order to understand their biological functions. For example, the function of insulin is dependent upon its particular amino acid sequence. A variety of techniques may be used to determine the linear order of amino acids. One of the most important sequential methods now being used is called the Edman process. The Edman process was originally described in Acta Chem. Scand. 4, 283 (1950). Four later articles describe a general form of its use: Blomback et al., "Human Fibrinopeptides Isolation, Characterization, and Structure," Biochem, Biophys. Acta, 115 (1966) 371—396; Edman and Begg, "A Protein Sequenator," European J. Biochem. 1 (1967) 80—91; Niall et al., "The Amino Acid Sequence of Porcine Thyrocalciton," Proc. of the National Academy of Sciences, Vol. 59 No. 4, pp. 1,321—1,328, April. 1968; and Niall, "Sequential Analysis of Proteins and Peptides" Fractions No. 2, pp. 1—10 (1969). Briefly, as discussed in the last article and as shown inside the cover of the Fractions publication, the Edman sequential degradation processes involve three stages: coupling, cleavage, and conversion. In the coupling stage phenyl isothiocyanate (PITC) reacts with the N-terminal α amino group of the peptide to form the phenylthiocarbamyl (PTC) derivative. The pH is normally maintained at between 9 and 10 and preferably between 9 and 9.5 for the coupling reaction. In the cleavage step anhydrous acid is used to cleave the PTC derivative, i.e., the anilinothiazolinone (ATZ). After extraction of the thiazolinone the residual peptide is ready for the next cycle of coupling and cleavage reactions. Aqueous acid is used to convert the thiazolinone to the phenylthiohydantoin (PTH) which may be analyzed in an appropriate manner such as by chromatography.

At the end of the coupling step the excess PITC and the organic constituents of the coupling buffer, which is used to maintain the desired environment (such as pH) for the coupling reaction, are removed by extraction with benzene. Certain breakdown products of PITC such as aniline and phenylthiourea are also removed. Diphenylthiourea, another side product, is poorly soluble in benzene but may be removed by further extraction with a more polar organic solvent such as ethyl or butyl acetate. The water from the coupling buffer must also be removed, for example by lyophilization. The reaction vessel is then subjected to a vacuum purging operation to remove any remaining undesired materials. The dried protein and its PTC derivative is then ready for cleavage.

During the cleavage operation the protein is dissolved in anhydrous acid, for example trifluoroacetic acid. Thus, there is a strong shift in pH from basic for the coupling reaction to acidic for the cleavage reaction. The acid is then evaporated and the cleaved thiazolinone derivative is extracted from the residual peptide with butyl chloride or ethylene dichloride. After evaporation of residual solvent and a further vacuum purging operation, the peptide or protein, now one residue shorter, is ready for the next cycle.

In the typical apparatus used to perform the coupling and cleavage steps, each series constitutes a cycle. The steps of each cycle may be broken down into seven stages. A typical apparatus for accomplishing this is the Beckman Protein Peptide Sequencer. The first of the seven stages is the coupling of the protein. This is followed by two wash stages giving precipitation of the sample along with a primary extraction of excess reagents and a secondary extraction of excess reagents. The cleavage stage, cleaving the amino acid residue on the end of the protein comes next. This is followed by a first extraction which extracts the cleaved amino acid residue. If desired, to be sure that all of the amino acid residue has been cleaved, a second cleavage step may be used followed by a second extraction step.

Reference is made to U.S. Patent 3,725,010 which describes in detail the above-referenced Beckman Protein Peptide Sequencer. This particular type of automatic protein/peptide sequenator avoided or minimized many of the difficulties and limitations experienced by the early efforts to automate a process for determining the amino acid sequence in protein. Several drawbacks were evident in the Edman protein sequenator. The Beckman sequencer includes a reaction cell or chamber having a rotating or spinning cup driven with the chamber. The chamber has to be properly insulated and sealed in order to ensure proper operation. In fluid communication with the reaction chamber are means for introducing and removing gases and liquids. Insulation of the chamber is necessary in order to provide a constant, uniform temperature critical for the reaction. Also, it is necessary to properly seal the reaction chamber so that during the evacuation step for waste removal and for drying, the proper vacuum environment is maintained within the chamber without having any degrading influence for the surrounding atmosphere. Consequently, it is necessary to specifically design a properly sealed driving mechanism for the spinning cup to ensure the vacuum environment within the reaction chamber. One approach as shown in the referenced patent is a magnetic coupling drive unit which is properly sealed. Included within the system are numerous vacuum seals that are necessary in order to ensure the proper environment when the vacuum is necessary. Also, rather high quality and precise vacuum pumps are necessary in order to provide the requisite vacuum when necessary. Also included are numerous vacuum lines and valves. All of this equipment to support the vacuum necessary in the reaction chamber requires a significant maintenance over a period of time.

In addition to the problem of maintenance as well as complexity of construction in a protein peptide sequencer using a vacuum or negative pressure during portions of the sequencing cycle, other disadvantages exist which have caused problems. Specifically, the use of a solution containing detergent has normally been precluded in the treatment in a spinning cup sequencer because the negative pressure causes foaming. Another problem occurs when some proteins absorb or adhere sufficiently to the wall of a glass cup or form vapor inhibited surface layers. When vacuum is applied within the cup, the underlying vapor formation may tend to lift the film from its apposition to the wall.

Another prior apparatus for analyzing proteins is shown in U.S. Patent 3,645,689. In this particular arrangement the reactor portion of the system is a vertical tube which has a plate on which graduated solid support is supplied. The reactants are brought to the sample in a carrier gas phase. The sample is absorbed to the graduated solid support. Amino acid derivative is removed by heating the solid support reactor and reducing the pressure. The derivative is thereby transferred to a sample absorber. It is necessary in this system also to use a vacuum within the reactor. The requirement for a vacuum system in conjunction with the reactor in a sequenator has the same problem as discussed above.

In U.S. Patent 3,717,436 another approach for an automated peptide protein sequencer is shown wherein vacuum is used for the evacuation and drying step according to selected portions of the sequencing cycle. However, in addition to using the vacuum with its requisite pumps, valves and seals, nitrogen is introduced at certain times to aid in the vacuum purging operation between the reaction steps to more completely remove undesirable materials. However, the nitrogen flushing aspect of this particular apparatus maintains the requirement for a vacuum system in the reactor and therefore has the inherent disadvantages as described above.

In the Gilbert 3,892,531 patent the reactor comprises the heated finger sample holder that in essence is a manual system which operates by the use of an inert gas to evaporate chemicals. Everything is delivered to this sample holder tip via vapor. The inert gas that is used for transporting is used also for flushing. The tip is designed to heat and cool.

Another prior art apparatus is disclosed in U.S. Patent 4,065,412 (Dreyer). This shows the use of a source of pressurised inert gas which is used for providing inert gas within the reaction chamber. However, the inert gas is used only for drying and purging functions, not for pressurisation, and this prior art document recommends the use of vacuum, with all the associated disadvantages discussed herein.

More specifically, many presently used sequencers require two vacuum pumps of 160 litres per minute capacity. The two pumps are necessary in order to provide one pump for low vacuum or rough vacuum and another pump for high vacuum or a fine vacuum. Other examples of present sequencers use one pump for all vacuum in the reaction chamber. These pumps reduce the pressure in the reaction chamber to enable the removal of the reactant, solvent and by-product vapors. A significant number of the vapors pass through the pump and are exhausted, but volatile alkaline buffer vapors remain in the pump until the acid vapors are removed from the reaction. As a result, salts are formed which contaminate the pump. The presence of these contaminating salts increases the pump wear and maintenance and decreases the evacuating efficiency of the pump.

The complexity in a system that uses slight positive pressure during portions of the cycle and vacuum at other times during the chemical cycle is considerable because of the requirement that all seals and connections must prevent the intrusion of atmospheric air to avoid detrimental effects of air on the chemistry in the reaction chamber.

Summary of the Invention

The present invention, which is defined in the appended claims, is directed to a protein/peptide sequencer whereby the reaction chamber in the apparatus is subjected to a continuous positive pressure relative to atmospheric pressure. The requirement of a vacuum or negative pressure at any time in the reaction chamber during the sequencing cycle is eliminated. The reaction cell chamber is continuously maintained under a positive pressure atmosphere which is oxygen free and has an inert gas atmosphere such as nitrogen during the entire sequencing cycle. Where prior systems required a vacuum for removal of reactant and/or solvent vapors, the removal is now accomplished by the flow of the inert gas through the reaction chamber. The evacuated vapors can be directed to a cold trap.

The use of a continual positive pressure through the system provides numerous advantages to the overall design of the system. The requirement for sophisticated and precise vacuum pumps is eliminated. Furthermore, required maintenance associated with the need for vacuum seals is eliminated and several valves and vacuum conduits are no longer needed, resulting in a simpler and, thus, an inherently more reliable system.

In addition to the structural advantages of using the present invention, it also becomes possible in preferred embodiments to obtain increased capability is using a sequencer with a spinning cup reactor. Formerly, some proteins required detergents for solubility but the negative pressure application to a solution containing a detergent caused foaming that precluded this treatment in the sequencer. The use of a positive pressure avoids foaming. Furthermore, some proteins absorb or adhere insufficiently to the wall of the glass cup or may form a vapor inhibitive surface layer that is not conducive to the application of a vacuum. The underlying vapor formation when subjected to a vacuum may tend to lift the film from the wall in the cup. The use of a positive pressure will reduce the tendency of a removal of such proteins from the wall of the cup.

The overall complexity of a sequencer not requiring vacuum in the reaction chamber is significantly reduced. The material and the seals necessary are greatly simplified or eliminated. In prior systems the alternating positive and negative pressures typically required rigid isolation of the reaction chamber because the negative pressures would invite incursion of air including oxygen and other contaminants into the inert atmosphere of the reaction chamber. However, a system with a continuous positive pressure of inert gas relative to the ambient or atmospheric pressure simplifies design requirements because there is no encouragement of the atmospheric air into the reaction chamber.

The results obtainable with a sequencer instrument incorporating the present invention are equivalent or better than in a sequencer instrument using a vacuum in the reaction chamber. The minimization of overlap, i.e., some of the prior cycle or residue remaining, is the equivalent or better using a sequencer with the present invention. Furthermore, the minimization of background, i.e., other amino acids visible from prior cycles, is the equivalent or better using the present invention.

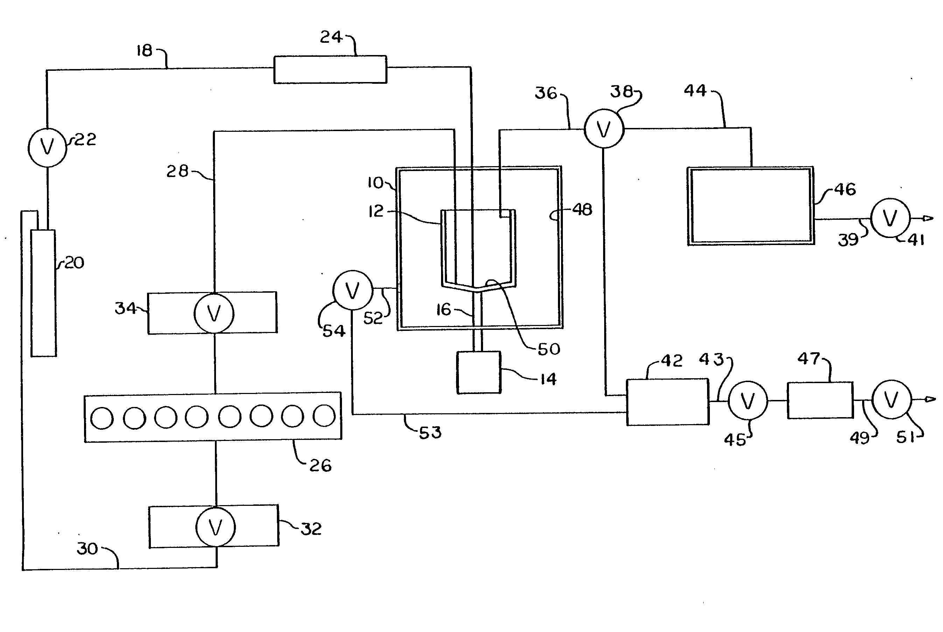

Brief Description of the Drawing

The figure shows in schematic form a sequencer system for determining the sequence of amino acids, proteins and peptides utilizing the present invention.

Detailed Description of the Invention

As shown in the figure, the sequencer of the present embodiment utilizes a reaction chamber 10 having a reaction cell or cup 12. The reaction chamber 10 is heated to a desired temperature for the reaction cycle during the sequencing operation. The reaction cell 12 is designed to rotate during the operation of the sequencing cycle and is driven by some type of motor means 14 connected by a shaft 16 to the spinning cup 12.

Reference is made to U.S. Patent 3,725,010 for more detail with respect to the reaction chamber and the reaction cell. Although in the referenced patent a particular drive system is shown using a magnetic coupling, it is envisioned that in the present invention the drive system can be much less complicated because, as will be explained, there is no requirement for a vacuum in the reaction chamber as was required in prior devices.

Connected in fluid communication by the transfer line 18 to the reaction cell 12 is an inert gas supply 20 such as nitrogen under positive pressure. The nitrogen passes through the line 18, a valve mechanism 22, and a preheater 24 before entering the lower portion of the spinning cell 12. The supply of inert gas to the cell through transfer line 18 is an important aspect of the present invention and its function in the sequencing operation will be explained in more detail below.

In the sequencing system there are a plurality of reagent and solvent supplies 26 which also are connected through a single or a plurality of transfer lines represented in the Figure by a single line 28 to the reaction chamber 10 and into the reaction cell 12. The transfer of the reagents or the solvents is accomplished by the inert gas flow through a transfer line 30 from the inert gas supply 20 through a valve system 32. The operation of the inert gas through the valve system 32 into the reagent/solvent supply 26 and through the valve system 34 is explained in more detail in the above-referenced 3,725,010 patent. The positive pressure of the inert gas provides a force to move the liquid solvent or reagent into the reaction cell 12 at the proper time during the sequencing cycle.

Removal of vapors during the reaction cycle is accomplished through the extraction line 36 which leads to a valve 38. The vapor is then directed through the waste line 40 into a waste container 42 for transfer to exhaust or another waste area. In a preferable arrangement vapor may exit the waste container 42 through a line 43 and a valve 45 to a cold trap 47. A vent line 49 with a valve 51 is connected to the cold trap. Also received through the extraction line 36 and through the valve 38 are derivatives which are directed to the collector line 44 and into a fraction collector 46 having a vent line 39 and valve 41.

In order to completely remove vapors from the reaction cup as well as the reaction chamber during the reaction cycle, both the extraction line 36 to the cup and vent line 52 to the chamber must be vented at the same time. The chamber vent line 52 is connected through valve 54 to the waste container 42.

Reference should be made to patent 3,725,010 for to a detailed description of the overall peptide/protein system with respect to the transfer of the solvents and reagents to the reaction cell as well as for more detail with respect to the transfer of the vapors, solvent and reactants to either the fraction collector or to the waste receptacle.

The important distinction with respect to the present invention as opposed to that shown in the reference patent is the fact that no vacuum is used in the reaction chamber during the sequencing cycle as will be explained. The evacuation or removal of any waste, by-product vapors or reactants is accomplished by the positive pressure of the inert gas flowing into the reaction cell and out through the extraction line 36 and vent line 52. Furthermore, detail with respect to the valving operations of the system 32 and 34 shown in the present invention to select and transfer the proper reagent or solvent at the proper time during sequencing cycle is shown in detail in the referenced patent. The operation of this valving system is actuated through a vacuum system that could operate through other means such as inert gas pressure or a solenoid arrangement. Therefore, the requirements for the vacuum pumps and vacuum lines in the arrangements shown in the referenced patent can be eliminated.

With respect to the operation of the peptide/protein system incorporating the present invention, a sample of polypeptide chain solution is placed in the reaction cell 12 which is a rotating glass cup. The solution assumes the form of a thin film on the inner wall 48 of the reaction cup as a result of the gravitational as well as centrifugal forces generated while the cup or cell 12 is being spun by the motor 14. The solvent within the film is removed as a vapor by the flow of positive pressure inert gas through the transfer line 18 which is preheated in the heater 24 as it enters the heated reaction chamber 10. The positive inert gas enters at the bottom 50 of the cup and flows over the thin film on the interior wall 48 and is exited through extraction line 36, valve 38 and waste line 40 to the waste receptacle 42, as well as through the chamber vent line 52 and valve 54 to the waste receptacle 42.

Phenyl isothiocyanate (PITC) or other suitable coupling agent is added in solvent such as heptane through the transfer line 28 and into the reaction cell 12 where it forms a thin film within the cup or cell 12. A major portion of the solvent such as heptane is removed by the flow of the inert gas into and over the thin film to the waste receptacle 42. The PITC remains as a thin film over the sample film. The solvent suitably is a detergent; the pressure maintained within chamber 10 inhibits foaming.

A buffer of suitable pH and composition for the Edman chemistry is delivered through the transfer line 28 and into the reaction cell 12. The exit to the waste receptacle 42 is open via the valve 38 during this delivery of the suitable buffer to maintain a uniform pressure differential and to accomplish the repetitive delivery volume. The valve 38 is then closed and a coupling reaction is allowed to take place in the closed reaction chamber 10 which has inert positive pressure atmosphere for the requisite reaction time.

When the coupling reaction is completed, the volatile portion of the reactants is removed with the flow of the inert gas through the transfer line 18 and into the reaction cell for removal through the extraction line 36 and the chamber vent line 52. The semi-dried film within the reaction cell 12 is then washed with benzene, benzene and ethyl acetate or other suitable solvents through transfer line 28 to extract excess coupling agent and its by-products through the extraction line 36 by the positive pressure inert gas. The excess solvent is also removed with the inert gas flow. Further solvent extraction to remove buffer by-products is achieved by the delivery of ethyl acetate or other suitable solvent through the transfer line 28. Again, the positive pressure inert gas flow provides the ability to remove the buffer by-products.

The thin film containing the phenylthiocarbamyl derivatized polypeptide chain is now dried with the flow of the inert gas through the line 18 and over the cup inner wall 48 and through a vent line 52 controlled by the valve 54. A cleavage acid is then delivered through the transfer line 28 over the thin film within the reaction cell to remove the amino terminal residue as an anilinothiazolinone derivatized amino acid (ATZ). The cleavage acid vapor is removed by the gas flow through the line 18. A solvent is then delivered through the transfer line 28 to extract the cleaved ATZ from the polypeptide chain. The solvent conveys the derivative to the fraction collector through the extraction line 36, the valve 38 and the collector line 44.

The residual solvent film is removed with inert gas flow to the drive polypeptide leaving it as a film ready for the next cycle in the sequencing system.

As noted from the above operation, the design of the transfer of the inert gas stream is such that it passes through the transfer line 18 and a heater 24 which is to preheat the gas as it enters the heated reaction chamber 10. Although the heater is not an absolute necessity, its use increases the efficiency of the system. The gas is designed to enter the spinning cup near the inside bottom 50 of the cup so that the gas will sweep over the inside surface of the cup. Gas will exit either at the top of the cup through the extraction line 36 or through a vent or line 52 located near the bottom of the reaction chamber 10. The regulation of the flow of the inert gas is achieved through the system by electrical solenoid valves under control of the sequencer or programmer.

Although reference has been made with respect to the use of the invention with respect to the Edman chemistry, this particular invention should not be considered as limited to only this application. The apparatus is capable of automatically performing a variety of chemical processes. The present invention is important in that it makes possible the compatability of the spinning cup sequencer instrument with chemical methodology that was difficult or impossible to perform in such an instrument because the use of detergents caused foaming and the sequencing of proteins that would tend to pull off the cup wall or support when the vacuum was applied.

**Claims**

1. A method of sequencing, comprising the steps of:

(a) placing a sample into a reaction vessel (12) located within a reaction chamber (10),

(b) drying said sample on the interior of said vessel (12),

(c) adding a coupling reagent into said vessel (12),

(d) removing solvent vapours from said coupling reagent and drying reaction product on the wall of said vessel (12),

(e) adding a buffer into said reaction vessel (12) for a coupling reaction,

(f) removing a volatile portion of the reactives of the coupling reaction and drying reaction product on the interior of said vessel (12),

(g) adding cleavage acid into said reaction vessel (12),

(h) transferring the cleaved reaction product to a fraction collector (46), and

(i) drying the residual reaction product in said reaction vessel (12);

characterised in that the reagents and solvents are supplied as liquids, and each drying, addition, removal and transfer step is effected by flow of inert gas under positive pressure relative to atmospheric pressure, and the reaction chamber (10) is maintained full of said inert gas under positive pressure throughout steps (b) to (i).

2. The method of claim 1, in which said solvent includes a detergent, and the inert gas pressure is sufficient to inhibit foaming of said detergent.

3. The method of claim 1 or claim 2, characterised in that the reaction vessel (12) is a spinning cup.

4. The method of any preceding claim, in which said inert gas is flowed from an inlet located within the interior volume of said vessel (12) to an outlet in said chamber (10).

5. Apparatus for conducting chemical sequencing processes, comprising:

a gas-tight reaction chamber (10),

a reaction cell (12) disposed within said chamber (10), and

means (20, 18, 30, 28, 26) for introducing liquid reagents and solvents into said cell (12) and for removing solvent vapours and reaction products from said cell (12) and said chamber (10);

characterised in that said means comprises a source (20) of pressurised inert gas connected to said chamber (10) so as to maintain therein a positive pressure relative to atmospheric pressure throughout the sequencing process.

6. The apparatus of claim 5, in which the reaction cell (12) is a spinning cup.

7. The apparatus of claim 5 or claim 6, in which said means comprises a first inlet conduit (18) connected between the gas source (20) and the interior of the reaction cell (12) whereby said gas can be introduced into the cell (12) for drying reagents therein and for pressurising the chamber (10), and a second inlet conduit (28) connected between the interior of the reaction cell (12) and a source (26) of selected reagents whereby said reagents can be selectively introduced into the cell (12).

8. The apparatus of claim 7, in which reagents are propelled from said reagent source (26) through said second inlet conduit by gas pressure from said inert gas source (20).

**Patentansprüche**

1. Verfahren zum Sequenzieren umfassend die Schritte:

(a) Einbringen einer Probe in ein in einer Reaktionskammer (10) angeordnetes Reaktionsgefäß (12),

(b) Trocknen der genannten Probe an der Innenseite des genannten Gefäßes (12),

(c) Einführen eines Kopplungsreagenz in das genannte Gefäß (12),

(d) Entfernen der Lösungsmitteldämpfe aus dem genannten Kopplungsreagenz an der Wand des genannten Gefäßes (12),

(e) Einführen eines Puffers in das genannte Gefäß (12) für eine Kopplungsreaktion,

(f) Entfernen eines flüchtigen Teiles der Reagenzien der Kopplungsreaktion und Trocknen des Reaktionsproduktes an der Innenseite des genannten Reaktionsgefäßes (12),

(g) Einführen von Spaltsäure in das genannte Reaktionsgefäß (12),

(h) überführen des gespaltenen Reaktionsproduktes in einen Fraktionssammler (46), und

(i) Trocknen des restlichen Reaktionsproduktes im genannten Reaktionsgefäß (12);

dadurch gekennzeichnet, daß die Reagenzien und Lösungsmittel als Flüssigkeiten vorgesehen sind und jeder Schritt für das Trocknen, Zusetzen, Entfernen und Überführen durch das Fließen von Inertgas unter im Verhältnis zum Atmosphärendruck positiven Druck durchgeführt wird und die Reaktionskammer (10) während der Schritte (b) bis (i) voll mit dem genannten Inertgas unter positivem Druck gehalten wird.

2. Verfahren nach Anspruch 1, bei dem das genannte Lösungsmittel ein Detergens umfaßt, und der Druck des Inertgases ausreicht, um das Schäumen des genannten Detergens zu verhindern.

3. Verfahren nach Anspruch 1 oder Anspruch 2, dadurch gekennzeichnet, daß das Reaktionsgefäß (12) ein rotierender Becher ist.

4. Verfahren nach einem der vorhergehenden Ansprüche, bei dem das Inertgas von einem Einlaß, der innerhalb des Innenvolumens des genannten Gefäßes (12) angeordnet ist, zu einem Auslaß in der genannten Kammer (10) geführt wird.

5. Vorrichtung zur Durchführung eines chemischen Sequenzierungsverfahrens umfassend:

eine gasdichte Reaktionskammer (10),

eine innerhalb der genannten Kammer (10) angeordnete Reaktionszelle (12) und

Mittel (20, 18, 30, 28, 26) zum Einführen von flüssigen Reagenzien und Lösungsmitteln in die genannte Zelle (12) und zum Entfernen der Lösungsmitteldämpfe und Reaktionsprodukte aus der genannten Zelle (12) und der genannten Kammer (10);

dadurch gekennzeichnet, daß die genannten Mittel eine Quelle (20) von unter Druck stehendem Inertgas umfassen, die mit der genannten Kammer (10) verbunden ist, damit während des gesamten Sequenziervorganges in dieser ein gegenüber Atmosphärdruck positiver Druck aufrechterhalten wird.

6. Vorrichtung nach Anspruch 5, in der die Reaktionszelle (12) ein rotierender Becher ist.

7. Vorrichtung nach Anspruch 5 oder Anspruch 6, in der die genannten Mittel eine zwischen der Gasquelle (20) und dem Innern der Reaktionszelle (12) angeschlossene erste Einlaßleitung (18), durch die das genannte Gas zum Trocknen der Reagenzien in der Zelle (12) und zum unter Druck setzen der Kammer (10) eingeführt werden kann, und eine zweite das Innere der Reaktionszelle (12) und eine Quelle (26) ausgesuchter Reagenzien verbindende Einlaßleitung (28) umfaßt, durch die die genannten Reagenzien selektiv in die Zelle (12) eingeführt werden können.

8. Vorrichtung nach Anspruch 7, in der die Reagenzien aus der genannten Reagenzienquelle (26) durch die genannte zweite Einlaßleitung mit Hilfe von Gasdruck aus der genannten Inertgasquelle (20) gefördert werden.

**Revendications**

1. Méthode de production de séquences, comprenant les étapes de:

(a) placer un échantillon dans un récipient réactionnel (12) placé dans une chambre de réaction (10),

(b) sécher ledit échantillon à l'intérieur dudit récipient (12),

(c) ajouter un réactif de couplage dans ledit récipient (12),

(d) enlever des vapeurs de solvant dudit réactif de couplage et sécher le produit réactionnel sur la paroi dudit récipient (12),

(e) ajouter un tampon dans ledit récipient réactionnel (12) pour une réaction de couplage,

(f) éliminer une partie volatile des réactifs de la réaction de couplage et sécher le produit réactionnel à l'intérieur dudit récipient (12),

(g) ajouter un acide de scission dans ledit récipient réactionnel (12),

(h) transférer le produit réactionnel scindé à un collecteur de fractions (46), et

(i) sécher le produit réactionnel résiduel dans ledit récipient réactionnel (12);

caractérisée en ce que les réactifs et solvants sont fournis sous la forme de liquides, et chaque étape de séchage, d'addition, d'enlèvement et de transfert est effectuée par l'écoulement d'un gaz inerte à une pression positive relativement à la pression atmosphérique et la chambre de réaction (10) est maintenue pleine dudit gaz inerte à une pression positive à travers toutes les étapes (b) à (i).

2. Méthode selon la revendication 1, où ledit solvant contient un détergent, et la pression de gaz inerte est suffisante pour inhiber la formation de mousse dudit détergent.

3. Méthode selon la revendication 1 ou 2, caractérisée en ce que le récipient réactionnel (12) est une coupe tournant rapidement.

4. Méthode selon l'une quelconque des revendications précédentes, où ledit gaz inerte s'écoule d'une entrée placée dans le volume intérieur dudit récipient (12), jusqu'à une sortie dans ladite chambre (10).

5. Dispositif pour entreprendre des procédés de production de séquences chimiques, comprenant:

une chambre de réaction (10) étanche aux gaz, une cellule de réaction (12) disposée dans ladite chambre (10), et

un moyen (20, 18, 30, 28, 26) pour introduire les réactifs et solvants liquides dans ladite cellule (12) et pour éliminer les vapeurs de solvant et les produits réactionnels de ladite cellule (12) et de ladite chambre (10);

caractérisé en ce que ledit moyen comprend une source (20) d'un gaz inerte sous pression, connectée à ladite chambre (10) afin d'y maintenir une pression positive relativement à la pression atmosphérique pendant tout le procédé de production de séquences.

6. Dispositif selon la revendication 5, où la cellule de réaction (12) est une coupe tournant rapidement.

7. Dispositif selon la revendication 5 ou la revendication 6, où ledit moyen comprend un premier conduit d'entrée (18) connecté entre la source de gaz (20) et l'intérieur de la cellule de réaction (12), ainsi ledit gaz peut être introduit dans la cellule (12) pour sécher les réactifs s'y trouvant et pour mettre la chambre (10) sous pression, et un second conduit d'entrée (28) connecté entre l'intérieur de la cellule de réaction (12) et une source (26) de réactifs choisis, ainsi lesdits réactifs peuvent être sélectivement introduits dans la cellule (12).

8. Dispositif selon la revendication 7, où les réactifs sont propulsés de ladite source de réactifs (26) à travers ledit second conduit d'entrée par la pression de gaz de ladite source de gaz inerte (20).